# EUROPÄISCHE PATENTSCHRIFT

(11) **EP 3 209 534 B1**
(45) Veröffentlichungstag und Bekanntmachung des Hinweises auf die Patenterteilung: **03.06.2020**
(21) Anmeldenummer: 15733351.9
(22) Anmeldetag: 25.06.2015
(51) Int. Cl.: B60L 58/12, B60W 50/14, B60W 50/16, B60W 40/08

(54) **INTELLIGENTER TANK- UND/ODER AUFLADEHINWEIS**
INTELLIGENT REFUELLING AND/OR RECHARGING MESSAGE
SYSTÈME INTELLIGENT D'INFORMATIONS DE RÉSERVOIR ET/OU DE CHARGE

(30) Priorität: 25.10.2014 DE 102014015852
(43) Veröffentlichungstag der Anmeldung: 30.08.2017
(73) Patentinhaber: Audi AG, 85045 Ingolstadt (DE)
(72) Erfinder: MAYER, Stefan, 85080 Gaimersheim (DE); ULLMANN, Christine, 24784 Westerrönfeld (DE); MÖGELE, Hannes, 87634 Günzach (DE); BLATTNER, Andreas, 84048 Mainburg (DE)
(86) Internationale Anmeldenummer: PCT/EP2015/001282
(87) Internationale Veröffentlichungsnummer: WO 2016/062360

(56) Entgegenhaltungen:
- EP-A1- 1 754 622
- EP-A1- 2 772 380
- WO-A1-2014/033380
- DE-A1-102012 005 674
- FR-A1- 2 976 888
- FR-A1- 2 976 889
- US-A1- 2008 042 813
- US-A1- 2010 148 952

## Beschreibung

Die Erfindung betrifft ein Fahrerassistenzsystem in einem Fahrzeug, das einen intelligenten Tank- und/oder Aufladehinweis generiert.

Fahrerassistenzsysteme sind in modernen Fahrzeugen weit verbreitet und unterstützen den Fahrer bei der Führung des Fahrzeugs. Ferner gehören Unterhaltungselektroniksysteme und Navigationssysteme zu Fahrerassistenzsystemen. Im Allgemeinen versorgen Fahrerassistenzsysteme den Fahrer mit Informationen über den Zustand des Fahrzeugs und dessen Komponenten, so auch über den Füllstand eines Fahrzeugtanks, und geben bei Unterschreiten einer Mindestfüllmenge meist ein optisches und/oder ein akustisches Signal aus. Dieser Tankhinweis bleibt aufrecht erhalten für den Zeitraum bis das Fahrzeug betankt worden ist, und der Füllstand die Mindestfüllmenge überschritten hat. In Fahrzeugen mit elektronischem Antrieb, beziehen sich diese Hinweismeldungen auf den Ladezustand der Fahrzeugbatterien bzw. -akkumulatoren.

In der Druckschrift DE 11 2009 000 257 T5 ist ein Fahrzeugbetankungsberatungssystem offenbart, dass einen oder mehrere Computer umfasst, die dahingehend eingerichtet sind, für eine spezifizierte Route, die während einer mehrtägigen Zeitspanne zu befahren ist, (i) mindestens einen Tag während der mehrtägigen Zeitspanne auszuwählen, an dem Treibstoff zu erwerben ist, (ii) mindestens eine Tankstelle entlang der Route auszuwählen, an der für jeden ausgewählten Tag Treibstoff zu erwerben ist, und (iii) eine an jeder ausgewählten Tankstelle zu erwerbende Treibstoffmenge zu bestimmen, wobei das Auswählen und das Bestimmen auf gegenwärtigen und vorhergesagten Treibstoffpreisen für die mehrtägige Zeitspanne basieren, um Tankkosten für die spezifizierte Route allgemein zu minimieren.

DE 10 2009 059 870 A1 offenbart ein Verfahren zum Anzeigen von Informationen in einem Fahrzeug, bei dem eine Nutzereingabe erfasst wird, durch die Nutzereingabe eine Information erstellt und eine zugeordnete Anzeigebedingung definiert wird und anschließend die Information mit der zugeordneten Anzeigebedingung gespeichert wird und die Information dargestellt wird, wenn die vom Nutzer definierte Anzeigebedingung erfüllt ist. Ferner wird eine Vorrichtung zum Darstellen von Informationen in einem Fahrzeug beschrieben, die eine Eingabevorrichtung zur Eingabe von Informationen und zugeordneten Anzeigebedingungen, eine Speichereinheit zur Speicherung der angegebenen Informationen mit den zugeordneten Anzeigebedingungen, eine Anzeigefläche und eine Steuervorrichtung, die mit der Speichereinheit der Anzeigefläche gekoppelt ist und mit der die Anzeige auf der Anzeigefläche steuerbar ist, umfasst.

DE 10 2012 219 929 A1 offenbart eine Fahrzeugassistenzvorrichtung mit einer Steuereinrichtung zum Erzeugen von Daten, die Empfehlungen zum Handeln für einen Fahrzeuginsassen angeben, eine Anzeigeeinrichtung zum Anzeigen der Empfehlungen in Abhängigkeit von den von der Steuereinrichtung erzeugten Daten, eine Identifizierungseinrichtung zum Identifizieren des Fahrzeuginsassen, eine Speichereinrichtung mit einem ersten Speicher zum Speichern von einem ersten Parameter, der einen Zustand definiert, und von einem dem ersten Parameter zugeordneten zweiten und dritten Parameter, wobei der zweite Parameter den Fahrzeuginsassen kennzeichnet und der dritte Parameter eine Verhaltensweise des Fahrzeuginsassen in dem Zustand angibt, wobei die Steuereinrichtung dazu ausgebildet ist, festzustellen, ob der in dem ersten Speicher gespeicherte Zustand vorliegt, wobei die Steuereinrichtung dazu ausgebildet ist, die Daten zum Anzeigen auf der Anzeigeeinrichtung in Abhängigkeit von dem dem ersten Parameter zugeordneten dritten Parameter zu erzeugen, wenn die Steuereinrichtung den durch den ersten Parameter gekennzeichneten Zustand feststellt und der von der Identifizierungseinrichtung identifizierte Fahrzeuginsasse mit dem durch den zweiten Parameter gekennzeichneten Fahrzeuginsassen übereinstimmt.

Die Druckschrift EP 1 754 622 A1 beschreibt eine Fahrzeuginformationsanzeigevorrichtung, in der eine optimale Anzeige gemäß Attributen, Inhalten und Arten von angezeigten Informationen und Präferenzen eines Benutzers und dergleichen erzielt wird, während eine Vergrößerung eines gesamten Anzeigebereichs eingeschränkt wird. Die Fahrzeuginformationsanzeigevorrichtung umfasst eine Messvorrichtung zum Anzeigen eines ersten Anzeigebilds, eine Mehrfachanzeige zum Anzeigen eines zweiten Anzeigebilds und eine Steuereinrichtung zum Steuern eines Betriebs, bei dem die Steuereinrichtung einen Änderungs- bzw. Umschaltprozess zum Umschalten des Anzeigemodus des ersten Anzeigebilds in Verbindung mit der Änderung des Anzeigemodus des zweiten Anzeigebilds durchführt.

Eine Anzeigevorrichtung, mit der lenkwinkelabhängig Informationen darzustellen sind, ist aus der Druckschrift DE 10 2012 005 674 A1 bekannt. Dabei ist mit der Anzeigevorrichtung auch eine Tankanzeige darstellbar.

Die Druckschrift WO 2014/033380 A1 beschreibt ein Informationsanzeigesystem für ein Fahrzeug.

Ein System zum Anzeigen eines Orts einer Tankstelle ist aus der Druckschrift EP 2 772 380 A1 bekannt.

Ein Hilfssystem für ein Fahrzeug zur Optimierung von Energiereserven ist aus der Druckschrift FR 2 976 888 A1 bekannt.

Die Druckschrift FR 2 976 889 A1 beschreibt eine Mensch-Maschine-Schnittstelle für ein Hybridfahrzeug.

Die Druckschrift US 2010/0148952 A1 zeigt ein System zum Warnen vor einem niedrigen Tankfüllstand.

Aus der Druckschrift US 2008/042813 A1 sind ein Gerät und ein Verfahren zur Warnung vor einer Gefahr bekannt, wobei mit einem Warngerät auf eine gefährliche Bedingung des Fahrzeugs visuell oder akustisch hingewiesen wird.

Nachteilig ist bei den bekannten Systemen hinsichtlich eines Tankhinweises, dass der Tankhinweis ausschließlich bei Unterschreiten einer Mindestfüllmenge des Fahrzeugtanks ausgelöst wird und bis zum Betanken des Fahrzeugs bestehen bleibt. Unberücksichtigt bleiben Fahrtziele und Fahrsituationen sowie persönliche Vorgaben des Fahrers.

Es war demnach eine Aufgabe der vorliegenden Erfindung eine Möglichkeit bereitzustellen, auch Fahrtziele, Fahrsituationen und/oder persönliche Vorgaben des Fahrers bei einer Ausgabe von Tankhinweismeldungen zu berücksichtigen.

Gelöst wird diese Aufgabe durch ein Fahrerassistenzsystem mit den Merkmalen von Patentanspruch 1 sowie ein entsprechendes Verfahren mit den Merkmalen von Patentanspruch 8. Weitere Ausgestaltungen der Erfindung gehen aus den abhängigen Patentansprüchen und der Beschreibung hervor.

In der vorliegenden Erfindung wird demnach ein Fahrzeugassistenzsystem vorgeschlagen, das einen intelligenten Tankhinweis generiert und den Fahrer darüber informiert, ob Fahrtziele noch erreicht werden oder ob in der näheren Umgebung eine präferierte Tankmöglichkeit gegeben ist. In den nachfolgenden Ausführungen zur Beschreibung der Erfindung bezieht sich der Begriff "Tankhinweismeldung" nicht ausschließlich auf den Füllstand eines Flüssigkraftstoffs, wie Benzin oder Diesel in einem Fahrzeugtank im Falle eines Kraftfahrzeugs mit Verbrennungsmotor, sondern explizit auch auf einen Ladezustand einer Fahrzeugbatterie und/oder -akkumulator im Falle eines Fahrzeugs mit Elektroantrieb. Ferner bezieht sich der Begriff "Tankhinweismeldung" im Rahmen der Erfindung auch auf ein Gastanksystem im Falle eines Fahrzeugs mit Gasantrieb.

Das beanspruchte Fahrerassistenzsystem weist eine Anzeigeeinheit und eine Auswerteeinheit zum Erzeugen und zum Darstellen einer Tankhinweismeldung auf, wobei die Tankhinweismeldung abhängig und unabhängig von einem Tankfüllstand erzeugt und für eine vorzugebende Zeitdauer dargestellt werden kann. Die Auswerteeinheit ist dabei dazu ausgelegt, ein Vorliegen von vorzugebenden Bedingungen zu prüfen und bei Vorliegen mindestens einer Bedingung auf deren Basis eine Tankhinweismeldung zu generieren und über die Anzeigeeinheit für die vorgegebene Zeitdauer auszugeben.

In möglicher Ausgestaltung berücksichtigen die vorzugebenden Bedingungen bspw. eine Erreichbarkeit aktueller und/oder zukünftiger Fahrtziele, eine momentane Fahrsituation, eine Anzahl an Personen im Fahrzeug oder persönliche Vorgaben des Fahrers.

In weiterer Ausgestaltung des erfindungsgemäßen Fahrerassistenzsystems weist das Fahrerassistenzsystem eine Eingabeeinheit auf, über die die persönlichen Vorgaben des Fahrers einzugeben sind.

Die momentane Fahrsituation wird in der Regel aus von einem oder mehreren Fahrerassistenzsystemumfeldsensoren ermittelten Daten, die der Auswerteeinheit bereitgestellt werden, abgeleitet. Die von der Auswerteeinheit bspw. in vorgebbaren zeitlichen ggf. regelmäßigen Abständen zu prüfenden Bedingungen müssen nicht alle über die Eingabeeinheit von bspw. einem Fahrer eingegeben werden, sondern können auch durch ein charakteristisches Verhalten des Fahrers von dem Fahrerassistenzsystem erlernbar sein.

Eine auszugebende Tankhinweismeldung kann dabei akustisch, grafisch, optisch, vibratorisch und/oder haptisch erfolgen.

Die "momentane Fahrsituation" kann bspw. über die angesprochenen Fahrerassistenzsystemumfeldsensoren ermittelt und mit in dem Fahrerassistenzsystem, d. h. in einem entsprechenden Speichermedium abgelegten "Fahrsituationen" abgeglichen werden, wobei bei Vorliegen einer Übereinstimmung mit einer dieser hinterlegten "Fahrsituationen" eine Bedingung erfüllt ist, die bewirkt, dass eine individuelle Tankhinweismeldung generiert und über die Anzeigeeinheit ausgegeben wird oder bewusst gerade nicht ausgegeben wird, wie bspw. bei einer kritischen Fahrsituation.

Eine Anzahl von Personen im Fahrzeug kann bspw. über in jeweiligen Sitzen des Fahrzeugs integrierte Gewichtssensoren ermittelt werden. Für jede Anzahl an Personen kann eine entsprechende individuelle Tankhinweismeldung hinterlegt sein, die bei einer konkret vorliegenden Anzahl an Insassen entsprechend ausgegeben wird. In der Regel sind an eine Tankhinweismeldung als eine Bedingung zu deren Anzeige mehrere Tatbestände bzw. Einflussfaktoren in Kombination geknüpft. So kann mit einer jeweiligen Anzahl an Fahrzeuginsassen eine spezifische Entfernung bis zum Ziel verknüpft sein, bei welcher eine Tankhinweismeldung ausgegeben wird. Das heißt, dass bei einer festgestellten Anzahl X1 an Fahrzeuginsassen bei einer für diese Anzahl X1 hinterlegten spezifischen Entfernung Y1 zum Ziel eine Tankhinweismeldung erfolgt, während bei einer anderen Anzahl X2 an Fahrzeuginsassen womöglich bei einer anderen Entfernung Y2 zum Ziel eine ggf. andere Tankhinweismeldung erfolgt.

Zusätzlich werden die Tankhinweismeldungen in möglicher Ausgestaltung in einem Navigationssystem des Fahrzeugs dargestellt und enthalten vorzugsweise eine Entfernungsangabe zur nächsten Tankstelle sowie die zugehörige Preisangabe des benötigten Kraftstoffs.

Ist ein kritischer Tankfüllstand erreicht, muss gemäß möglicher Ausgestaltung des erfindungsgemäßen Fahrerassistenzsystems eine erzeugte und ausgegebene bzw. angezeigte Tankhinweismeldung vom Fahrer bestätigt werden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im folgenden unter Bezugnahme auf die Zeichnung ausführlich beschrieben.
Figur 1 zeigt eine schematische Darstellung eines Fahrzeugcockpits mit Komponenten einer Ausführungsform des erfindungsgemäßen Fahrerassistenzsystems.
Figur 2 zeigt einen Ausschnitt aus einem Navigationsbildschirm als Teil der Ausführungsform des Fahrerassistenzsystems aus Figur 1.

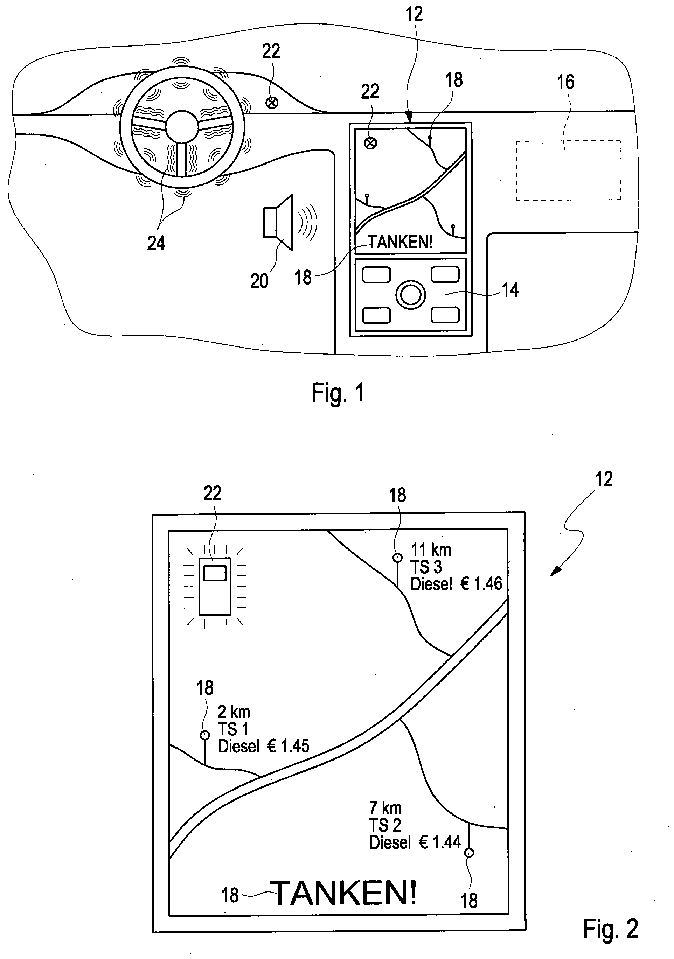

In Figur 1 ist eine schematische Darstellung eines Fahrzeugcockpits mit Komponenten eines erfindungsgemäßen Fahrerassistenzsystems dargestellt. Das Fahrerassistenzsystem weist eine Anzeigeeinheit 12 auf. Die Anzeigeeinheit 12 kann dabei ein Bildschirm als Teil eines Navigationssystems sein. Angedeutet ist auch eine Auswerteeinheit 16, die dazu ausgelegt ist, vorzugebende Bedingungen zu prüfen. Auf Basis der Prüfung und bei Erfüllen mindestens einer Bedingung wird eine individuelle Tankhinweismeldung 18 generiert. Diese kann beispielsweise über die Anzeigeeinheit 12 an einen Fahrer ausgegeben werden.

Tatbestände bzw. Einflussfaktoren, die bei den Bedingungen und somit auch bei deren Auswertung berücksichtigt werden, können bspw. zukünftige Fahrtziele beinhalten. Beispielsweise kann eine Bedingung hinterlegt sein, dass eine Tankhinweismeldung generiert werden soll, wenn die mit dem in einem Tank des Fahrzeugs noch vorhandenem Kraftstoff zurücklegbare Strecke geringer ist als eine im Navigationssystem des Fahrzeugs gespeicherte zukünftige Route zu einem Fahrtziel. Erkennt das Fahrerassistenzsystem bzw. die Auswerteeinheit 16, dass ein künftiges Fahrtziel nur mit einem einzulegenden Tankstopp erreicht wird, generiert die Auswerteeinheit 16 eine Tankhinweismeldung 18, die den Fahrer darüber informiert. Die Meldung wird auch dann generiert, wenn zum Beispiel eine Mindestfüllmenge eines Fahrzeugtanks noch nicht unterschritten ist. Die Art der Ausgabe unterscheidet sich jedoch, je nach dem wie viel Kraftstoff noch im Fahrzeugtank vorhanden ist. Anfangs wird beispielsweise nur in zeitlichen Abständen temporär eine Tankhinweismeldung ausgegeben, die besagt, dass während der Fahrt getankt werden muss, beispielsweise über eine kurze Texteinblendung oder ein temporär erscheinendes Symbol auf einem Display der Anzeigeeinheit. Verringert sich der Kraftstoff im Fahrzeugtank, wird beispielsweise die Tankhinweismeldung durch ein akustisches Signal unterstützt und/oder im Navigationsmenü werden Tankstellen in der Umgebung auf einer Karte dargestellt, wie dies beispielhaft in Figur 2 skizziert ist. Ferner kann es dann auch zu einer bleibenden Anzeige der Tankhinweismeldung kommen.

Eine weitere hinterlegte Bedingung kann eine momentane Fahrsituation berücksichtigen. Beispielsweise soll keine Tankhinweismeldung während einer kritischen Fahrsituation ausgegeben werden. Über Sensoren kann das Fahrerassistenzsystem eine kritische Fahrsituation ableiten, beispielsweise über ein Kurvenprofil der Strecke, einen Abstand zu voraus- und/oder hinterherfahrenden Fahrzeugen, Geschwindigkeit oder wie fest das Lenkrad gegriffen wird. Erkennt das System, dass eine solche kritische Fahrsituation vorliegt, und erreicht der Tankfüllstand ein Niveau, bei dem im Normalfall eine Tankhinweismeldung generiert werden würde, bleibt während einer kritischen Fahrsituation eine Tankhinweismeldung 18 unterdrückt und wird erst ausgegeben, nachdem sich die Situation entspannt hat.

Auch ist denkbar, dass eine Anzahl an Personen im Fahrzeug bei einer der Bedingungen berücksichtigt wird. Die entsprechende Bedingung kann beispielsweise lauten, dass, wenn sich nur eine Person im Fahrzeug befindet, nämlich der Fahrer, eine generierte und auszugebende Tankhinweismeldung durch einen entsprechenden akustischen Hinweis und/oder eine Sprachausgabe unterstützt wird. Stellt das System fest, dass nur eine Person, nämlich der Fahrer, sich im Fahrzeug befindet, unterstützt das System eine generierte und auszugebende Tankhinweismeldung 18 durch eine zusätzliche Sprachausgabe 20 und/oder einen entsprechenden akustischen Hinweis.

Auch persönliche Vorgaben des Fahrers können berücksichtigt werden. Persönliche Vorgaben des Fahrers können beispielsweise über eine Eingabeeinheit 14 dem Fahrerassistenzsystem übermittelt werden oder durch wiederholtes charakteristisches Verhalten vom Fahrerassistenzsystem erlernt werden. Die persönlichen Vorgaben beinhalten beispielsweise Preisbereiche, in denen der Fahrer vorzugsweise das Fahrzeug betanken möchte. Erkennt das Fahrerassistenzsystem über eine mobile Datenverbindung, dass eine Tankstelle in der Umgebung in diesem Preisbereich Kraftstoff anbietet, kann eine Tankhinweismeldung 18 generiert werden, ohne dass ein Tanken zwingend notwendig wäre. Auch können Tankhinweismeldungen 18 mit einem Tankstellenvorschlag mit Preisen versehen werden. Tankstellenvorschläge können sich auf von dem Fahrer bevorzugte Marken konzentrieren und Angaben zu Preisen und einer ggf. gegebenen Abweichung von der geplanten Fahrtstrecke enthalten. Bei einer Darstellung von Tankstellen auf einem Navigationsbildschirm können bevorzugte Marken hervorgehoben werden und andere nicht bevorzugte Marken in schwächerer Farbgebung dargestellt sein.

In weiterer Ausgestaltung ist es vorstellbar, dass Tankhinweismeldungen 18 über verschiedene Optionen ausgebbar sind. Vorstellbar ist beispielsweise ein akustischer Ton 20, der dem Fahrer ein notwendiges Tanken signalisiert. Ebenfalls kann der Tankhinweis ein optisches Signal 22 beinhalten, indem beispielsweise eine Leuchte in der Anzeigeeinheit aufleuchtet. Auch grafische Hinweise, beispielsweise im Bildschirm eines Navigationssystems sind vorstellbar. Ist die Restmenge im Fahrzeugtank kritisch, kann auch eine Vibration 24, beispielsweise eines Lenkrads, erfolgen, um den Fahrer auf die Situation hinzuweisen. Eine Tankhinweismeldung 18 kann auch in einer Kombination der genannten Optionen ausgegebenen werden.

Erkennt das Fahrerassistenzsystem nach dem Starten des Fahrzeugs, dass das Fahrzeug betankt werden muss und ist die Restreichweite gering, kann eine Tankhinweismeldung erfolgen, die der Fahrer bestätigen muss.

## Patentansprüche

1. Fahrerassistenzsystem in einem Fahrzeug mit einer Anzeigeeinheit (12) und einer Auswerteeinheit (16) zum Erzeugen und Darstellen einer Tank- und/oder Aufladehinweismeldung, die abhängig und unabhängig von einem Tankfüllstand bzw. einem Batterieladezustand erzeugt und für eine definierte Zeitdauer dargestellt werden kann, wobei die Auswerteeinheit (16) dazu ausgelegt ist, ein Vorliegen von vorzugebenden Bedingungen zu prüfen und bei Vorliegen mindestens einer Bedingung, auf deren Basis eine Tank- und/oder Aufladehinweismeldung (18) zu generieren und über die Anzeigeeinheit (12) auszugeben, wobei die vorzugebenden Bedingungen eine momentane Fahrsituation, die aus Daten mehrerer Fahrerassistenzumfeldsensoren ableitbar ist, berücksichtigen,
**dadurch gekennzeichnet, dass**
wenn das Fahrerassistenzsystem über die Fahrerassistenzumfeldsensoren eine kritische Fahrsituation ableitet und erkennt, dass eine solche kritische Fahrsituation vorliegt, und der Tankfüllstand bzw. der Batterieladezustand ein Niveau erreicht, bei dem im Normalfall eine Tank- und/oder Aufladehinweismeldung generiert werden würde, die Tank- und/oder Aufladehinweismeldung während der kritischen Fahrsituation unterdrückt bleibt und erst ausgegeben wird, nachdem sich die Fahrsituation entspannt hat.

2. Fahrerassistenzsystem nach Anspruch 1, wobei die vorzugebenden Bedingungen
- eine Erreichbarkeit aktueller und/oder zukünftiger Fahrtziele,
- eine Anzahl an Personen im Fahrzeug und/oder
- persönliche Vorgaben eines Fahrers
berücksichtigen.

3. Fahrerassistenzsystem nach Anspruch 2, wobei die persönlichen Vorgaben des Fahrers über eine Eingabeeinheit (14) einzugeben sind oder vom Fahrerassistenzsystem aus einem Verhalten und aus Vorlieben des Fahrers zu erlernen sind.

4. Fahrerassistenzsystem nach einem der voranstehenden Ansprüche, wobei die Tank- und/oder Aufladehinweismeldung (18) akustisch (20), grafisch (12), optisch (22), sprachlich (20), vibratorisch und/oder haptisch (24) ausgebbar ist.

5. Fahrerassistenzsystem nach einem der voranstehenden Ansprüche, wobei die Tank- und/oder Aufladehinweismeldung (18) bei Vorliegen eines niedrigen Tankfüllstand bzw. Ladezustand vom Fahrer bestätigt werden muss.

6. Fahrerassistenzsystem nach Anspruch 4, wobei die Tank- und/oder Aufladehinweismeldung (18) als grafische Tank- und/oder Aufladehinweismeldung in einem Navigationssystem des Fahrzeugs darzustellen ist und eine Entfernungsangabe enthält.

7. Fahrerassistenzsystem nach einem der voranstehenden Ansprüche, wobei das Fahrerassistenzsystem Informationen über umliegende Tankstellen und/oder Aufladestationen über eine mobile Datenverbindung erhält.

8. Verfahren zur Erzeugung und Darstellung einer individuellen Tank- und/oder Aufladehinweismeldung, bei dem ein Vorliegen einer oder mehrerer vorzugebenden Bedingungen geprüft und bei Vorliegen mindestens einer Bedingung auf deren Basis die individuelle Tank- und/oder Aufladehinweismeldung generiert und in mindestens einem definierten Zeitintervall ausgegeben wird, wobei die individuelle Tank- und/oder Aufladehinweismeldung abhängig und unabhängig von einem Tankfüllstand bzw. Batterieladezustand erzeugt und ausgegeben werden kann, wobei bei den vorzugebenden Bedingungen eine momentane Fahrsituation, die aus Daten mehrerer Fahrerassistenzumfeldsensoren ableitbar ist, berücksichtigt wird,
**dadurch gekennzeichnet, dass**
wenn ein Fahrerassistenzsystem über die Fahrerassistenzumfeldsensoren eine kritische Fahrsituation ableitet und erkennt, dass eine solche kritische Fahrsituation vorliegt, und der Tankfüllstand bzw. der Batterieladezustand ein Niveau erreicht, bei dem im Normalfall eine Tank- und/oder Aufladehinweismeldung generiert werden würde, die Tank- und/oder Aufladehinweismeldung während der kritischen Fahrsituation unterdrückt bleibt und erst ausgegeben wird, nachdem sich die Fahrsituation entspannt hat.

9. Verfahren nach Anspruch 8, bei dem bei den vorzugebenden Bedingungen
- eine Erreichbarkeit aktueller und/oder zukünftiger Fahrziele,
- eine Anzahl an Personen im Fahrzeug und/oder
- persönliche Vorgaben eines Fahrers
berücksichtigt werden.

10. Verfahren nach Anspruch 9, bei dem ein Fahrerassistenzsystem verwendet wird, bei dem die persönlichen Vorgaben des Fahrers über eine Eingabeeinheit (14) eingegeben oder vom Fahrerassistenzsystem aus einem Verhalten und aus Vorlieben des Fahrers erlernt werden.

11. Verfahren nach einem der Ansprüche 8 bis 10, bei dem die Tank- und/oder Aufladehinweismeldung (18) akustisch (20), grafisch (12), optisch (22), sprachlich (20), vibratorisch und/oder haptisch ausgegeben wird.

12. Verfahren nach einem der Ansprüche 8 bis 11, bei dem für die Tank- und/oder Aufladehinweismeldung (18) bei Vorliegen eines niedrigen Tankfüllstands bzw. Batterieladezustands eine Bestätigung vom Fahrer angefordert wird.

13. Verfahren nach Anspruch 11, bei dem die Tank- und/oder Aufladehinweismeldung (18) als grafische Tank- und/oder Aufladehinweismeldung in einem Navigationssystem des Fahrzeugs dargestellt und eine Entfernungsangabe hinzufügt wird.

14. Verfahren nach einem der Ansprüche 8 bis 13, bei dem Informationen über umliegende Tankstellen bzw. Ladestationen über eine mobile Datenverbindung erhalten werden.

15. Kraftfahrzeug mit einem Fahrerassistenzsystem nach einem der Ansprüche 1 bis 7.

## Claims

1. Driver assistance system in a vehicle having a display unit (12) and an evaluation unit (16) for generating and displaying a refuelling and/or recharging message which can be generated as a function of or independently of a fuel tank filling level or a state of charge of a battery and can be displayed for a defined period of time, wherein the evaluation unit (16) is configured to check for the presence of conditions which are to be predefined, and, when at least one condition applies, to generate on the basis thereof a refuelling and/or recharging message (18) and output the latter via the display unit (12), wherein the conditions which are to be predefined take into account a momentary driving situation, which is derivable from data of a plurality of driver assistance environment sensors, **characterised in that**, when the driver assistance system derives a critical driving situation via the driver assistance environment sensors and detects that such a critical driving situation exists, and the fuel tank filling level or the state of charge of the battery reaches a level at which a refuelling and/or recharging message would normally be generated, the refuelling and/or recharging message remains suppressed during the critical driving situation and is not output until after the driving situation has become more relaxed.

2. Driver assistance system according to claim 1, wherein the conditions which are to be predefined take into account
- a reachability of current and/or future destinations,
- a number of persons in the vehicle and/or
- personal settings of a driver.

3. Driver assistance system according to claim 2, wherein the personal settings of the driver are to be entered via an input unit (14) or are to be learnt by the driver assistance system from a behaviour and from preferences of the driver.

4. Driver assistance system according to any one of the preceding claims, wherein die refuelling and/or recharging message (18) can be output acoustically (20), graphically (12), optically (22), verbally (20), vibrationally and/or haptically (24).

5. Driver assistance system according to any one of the preceding claims, wherein the refuelling and/or recharging message (18) must be confirmed by the driver, if a low fuel tank filling level or state of charge applies.

6. Driver assistance system according to claim 4, wherein the refuelling and/or recharging message (18) is to be displayed as graphic refuelling and/or recharging message in a navigation system of the vehicle and contains an indication of distance.

7. Driver assistance system according to any one of the preceding claims, wherein the driver assistance system receives information about nearby filling stations and/or charging stations via a mobile data connection.

8. Method for generating and displaying an individual refuelling and/or recharging message, in which a presence of one or more conditions, which are to be predefined, is checked and, when at least one condition applies, the individual refuelling and/or recharging message is generated on the basis thereof and is output in at least one defined time interval, wherein the individual refuelling and/or recharging message can be generated and output as a function of and independently of a fuel tank filling level or state of charge of a battery, wherein, given the conditions which are to be predefined, a momentary driving situation, which is derivable from data of a plurality of driver assistance environment sensors, is taken into account, **characterised in that**, when a driver assistance system derives a critical driving situation via the driver assistance environment sensors and detects that such a critical driving situation exists, and the fuel tank filling level or the state of charge of the battery reaches a level at which a refuelling and/or recharging message would normally be generated, the refuelling and/or recharging message remains suppressed during the critical driving situation and is not output until after the driving situation has become more relaxed.

9. Method according to claim 8, in which, given the conditions which are to be predefined,
- a reachability of current and/or future destinations,
- a number of persons in the vehicle and/or
- personal settings of a driver
are taken into account.

10. Method according to claim 9, in which a driver assistance system is used, in which the personal settings of the driver are entered via an input unit (14) or are learnt by the driver assistance system from a behaviour and from preferences of the driver.

11. Method according to any one of claims 8 to 10, in which the refuelling and/or recharging message (18) is output acoustically (20), graphically (12), optically (22), verbally (20), vibrationally and/or haptically.

12. Method according to any one of claims 8 to 11, in which a confirmation is requested from the driver for the refuelling and/or recharging message (18), if a low fuel tank filling level or state of charge of a battery applies.

13. Method according to claim 11, in which the refuelling and/or recharging message (18) is displayed as graphic refuelling and/or recharging message in a navigation system of the vehicle and an indication of distance is added.

14. Method according to any one of claims 8 to 13, in which information about nearby filling stations and/or charging stations is received via a mobile data connection.

15. Motor vehicle with a driver assistance system according to any one of claims 1 to 7.

## Revendications

1. Système d'assistance au conducteur dans un véhicule avec une unité d'affichage (12) et une unité d'évaluation (16) pour la génération et la représentation d'un message d'information de réservoir et/ou de recharge, qui peut être généré de façon dépendante et indépendante d'un niveau de remplissage de réservoir ou d'un état de charge de batterie et représenté pendant une durée définie, dans lequel l'unité d'évaluation (16) est conçue pour vérifier une présence de conditions à prédéfinir et en présence d'au moins une condition de générer sur sa base un message d'information de réservoir et/ou de recharge (18) et de l'éditer par le biais de l'unité d'affichage (12), dans lequel les conditions à prédéfinir tiennent compte d'une situation de conduite momentanée, qui peut être déduite des données de plusieurs capteurs d'environnement d'assistance au conducteur,
**caractérisé en ce que**
lorsque le système d'assistance au conducteur déduit une situation de conduite critique par le biais des capteurs d'environnement d'assistance au conducteur et détecte qu'il y a une telle situation de conduite critique, et le niveau de remplissage de réservoir ou l'état de charge de batterie atteint un niveau pour lequel un message d'information de réservoir et/ou de recharge serait normalement généré, le message d'information de réservoir et/ou de recharge reste inhibé pendant la situation de conduite critique et n'est édité qu'après que la situation de conduite s'est débloquée.

2. Système d'assistance au conducteur selon la revendication 1, dans lequel les conditions à prédéfinir tiennent compte
- d'une accessibilité des destinations actuelles et/ou futures,
- d'un nombre de personnes dans le véhicule et/ou
- de prescriptions personnelles d'un conducteur.

3. Système d'assistance au conducteur selon la revendication 2, dans lequel les prescriptions personnelles du conducteur sont à saisir par le biais d'une unité de saisie (14) ou doivent être apprises par le système d'assistance au conducteur à partir d'un comportement et des préférences du conducteur.

4. Système d'assistance au conducteur selon l'une quelconque des revendications précédentes, dans lequel le message d'information de réservoir et/ou de recharge (18) peut être édité de manière acoustique (20), graphique (12), optique (22), linguistique (20), vibratoire et/ou haptique (24).

5. Système d'assistance au conducteur selon l'une quelconque des revendications précédentes, dans lequel le message d'information de réservoir et/ou de recharge (18) doit être confirmé par le conducteur en présence d'un faible niveau de remplissage de réservoir ou état de charge de batterie.

6. Système d'assistance au conducteur selon la revendication 4, dans lequel le message d'information de réservoir et/ou de recharge (18) doit être représenté en tant que message d'information de réservoir et/ou de recharge graphique dans un système de navigation du véhicule et contient une indication de distance.

7. Système d'assistance au conducteur selon l'une quelconque des revendications précédentes, dans lequel le système d'assistance au conducteur reçoit des informations sur les stations-service et/ou stations de recharge environnantes via une connexion de données mobile.

8. Procédé de génération et de représentation d'un message d'information de réservoir et/ou de recharge individuel, pour lequel une présence d'une ou plusieurs conditions à prédéfinir est vérifiée et en présence d'au moins une condition le message d'information de réservoir et/ou de recharge individuel est généré sur sa base et est édité dans au moins un intervalle de temps défini, dans lequel le message d'information de réservoir et/ou de recharge individuel peut être généré et édité de façon dépendante et indépendante d'un niveau de remplissage de réservoir ou état de charge de batterie, dans lequel une situation de conduite momentanée, qui peut être déduite des données de plusieurs capteurs d'environnement d'assistance au conducteur, est prise en compte pour les conditions à prédéfinir,
**caractérisé en ce que**
lorsqu'un système d'assistance au conducteur déduit une situation de conduite critique par le biais des capteurs d'environnement d'assistance au conducteur et détecte qu'il y a une telle situation de conduite critique, et le niveau de remplissage de réservoir ou l'état de charge de batterie atteint un niveau pour lequel un message d'information de réservoir et/ou de recharge serait normalement généré, le message d'information de réservoir et/ou de recharge reste inhibé pendant la situation de conduite critique et n'est édité qu'après que la situation de conduite s'est débloquée.

9. Procédé selon la revendication 8, dans lequel
- une accessibilité des destinations actuelles et/ou futures,
- un nombre de personnes dans le véhicule et/ou
- des prescriptions personnelles d'un conducteur
sont prises en compte pour les conditions à prédéfinir.

10. Procédé selon la revendication 9, dans lequel un système d'assistance au conducteur est utilisé, dans lequel les prescriptions personnelles du conducteur sont saisies par le biais d'une unité de saisie (14) ou sont apprises par le système d'assistance au conducteur à partir d'un comportement et des préférences du conducteur.

11. Procédé selon l'une quelconque des revendications 8 à 10, dans lequel le message d'information de réservoir et/ou de recharge (18) est édité de manière acoustique (20), graphique (12), optique (22), linguistique (20), vibratoire et/ou haptique.

12. Procédé selon l'une quelconque des revendications 8 à 11, dans lequel une confirmation du conducteur est demandée pour le message d'information de réservoir et/ou de recharge (18) en présence d'un faible niveau de remplissage de réservoir ou état de charge de batterie.

13. Procédé selon la revendication 11, dans lequel le message d'information de réservoir et/ou de recharge (18) est représenté en tant que message d'information de réservoir et/ou de recharge graphique dans un système de navigation du véhicule et une indication de distance est ajoutée.

14. Procédé selon l'une quelconque des revendications 8 à 13, dans lequel des informations sur les stations-service ou stations de recharge environnantes sont reçues via une connexion de données mobile.

15. Véhicule automobile avec un système d'assistance au conducteur selon l'une quelconque des revendications 1 à 7.
